# EUROPEAN PATENT SPECIFICATION

(11) **EP 1 533 339 B1**
(45) Date of publication and mention of the grant of the patent: **03.01.2007**
(21) Application number: 04292698.0
(22) Date of filing: 15.11.2004
(51) Int. Cl.: C08L 23/02, B32B 27/32

(54) **Resin composition for use in release film and release film produced therefrom**
Harzzusammensetzung für Trennfolie und daraus hergestellte Trennfolie
Composition de résine pour film de relâchement et film de relâchement produit avec cette composition

(30) Priority: 21.11.2003 JP 2003392820; 12.10.2004 JP 2004297398
(43) Date of publication of application: 25.05.2005
(73) Proprietor: TOSOH CORPORATION, Shunan-shi, Yamaguchi (JP)
(72) Inventor: Kouda, Shingo, Yokkaichi-shi, Mie-ken (JP)
(74) Representative: Bentz, Jean-Paul

(56) References cited:
- WO-A-98/10724
- WO-A-02/090426
- US-A1- 2003 008 153
- US-B1- 6 472 077

## Description

### BACKGROUND OF THE INVENTION

### Field of the Invention

The present invention relates to a resin composition for use in a release film and to a release film prepared using the resin composition. More in detail, the present invention relates to a release film having an excellent release characteristic over an adhesive etc., and less detachment of release agent.

### Description of Related Art

A release film is a film-like material which is laminated on an adhesive surface of an adhesive material so as to protect the adhesive surface of an unused adhesive material and which has a strippable surface which is easily stripped without damaging the adhesive surface when it is used. The release film is widely used as a pasteboard of an adhesive tape and an adhesive label. The release film is usually constituted from a substrate and a release layer containing a release agent, formed on one surface of the substrate.

Paper, a plastic film, etc. are used for the substrate, and a silicone compound, a compound containing a long chain alkyl group, etc., are used for the release agent. In such a release film, if the release agent has not been adhered sufficiently to the substrate, when a tape and a label are stripped from the release film, the release agent may transfer to the adhesive surface of the tape or the label to deteriorate the adhesiveness of the tape or the label.

For this reason, as a manufacturing method for the release film, it is common for the release agent, such as a vinyl group containing polydimethylsiloxane to be applied to the substrate, and then the release agent is cured. However, by this method, a large amount of organic solvent is used for coating the release agent uniformly, and pin holes may be formed since the substrate is exposed to high temperatures in curing the release agent.

For this reason, a method for giving a release characteristic to the plastic material used as the substrate instead of coating the release agent is proposed.

For example, Japanese Unexamined Patent Application, First Publication No. H06-41500 discloses a resin composition containing a polyethylene and a silicone compound, and a manufacturing method for a stripping sheet. In the Japanese Unexamined Patent Application, First Publication No. H06-41500, it is described that as the silicone compound, a product obtainable from the following method is desirable: charging a reactor with dimethyl silicone oil, polymethylhydrogensiloxane and an alpha-olefin having one vinyl group on its end and chloroplatinic acid as a catalyst, heating the mixture charged in the reactor to cause an addition reaction to form a resin composition, then blocking unreacted hydrogen groups of the resin composition, and then adding a catalyst and propylene into the reactor, and heating the reactor to cause an addition reaction of the resin composition to obtain a product. However, this method has a problem that it is difficult to control the strippability because the addition reaction will proceed in an extruder, and that adhesive strength between the substrate and the resin composition will decrease.

Furthermore, Japanese Unexamined Patent Application, First Publication No.S63-249627 discloses a method including the steps of adding polydimethylsiloxane to polyethylene and of irradiating the resultant reaction mixture with an electron beam.

Japanese Unexamined Patent Application, First Publication No. S63-249627 discloses a method including the step of irradiating the above resultant reaction mixture with radioactive rays. However, these methods require expensive irradiation apparatuses and hence these methods are not often utilized.

### SUMMARY OF THE INVENTION

The present invention is made in view of the above situations. That is, an object of the present invention is to provide a resin composition for use in a release film and a release film, for which there is no need to coat a substrate with silicone compounds containing organic solvent, excellent extrusion film processability, and no risk of deteriorating adhesive strength between the resin composition and the substrate.

The inventors of the present invention thoroughly researched to solve the above problems and found that it is possible to produce a release film having both excellent release property and excellent cost performance by using an olefin type resin composition in which in a specific amount of a polydimethylsiloxane having a specific epoxy group is compounded, with a specific olefin type polymer, and as a result made the present invention.

That is, the present invention relates to a resin composition for use in a release film, including 95-99.99 weight % of an olefin type polymer, and 0.01-5 weight % of a polydimethylsiloxane having epoxy groups of which epoxy equivalent is not less than 500 g/mol and not more than 50,000 g/mol.

Furthermore, the present invention relates to a release film which uses the above resin composition for use in a release film, and to a release film at least one surface of which is processed by an oxidizing treatment using at least one selected from the group consisting of corona discharge treatment, flame treatment and plasma treatment.

Hereafter, the present invention will be explained in detail.

Generally, the olefin type polymer used in the present invention is called a polyolefin type resin, and such polyolefin resin indicates homopolymer or copolymer of alpha-olefin having 2-12 carbon atoms, such as ethylene, propylene, and 1-butene.

For example, an ethylene type polymer such as low-density polyethylene, high-density polyethylene, ethylene/1-butene copolymer, ethylene/1-hexene copolymer, ethylene/1-octene copolymer, ethylene/4-methyl-1-pentene copolymer, ethylene/vinyl acetate copolymer, ethylene/acrylic acid copolymer, ethylene/methacrylic acid copolymer, ethylene/acrylic ester copolymer, and ethylene/methacrylic acid ester copolymer; propylene type polymers, such as polypropylene, propylene/ethylene copolymer, and propylene/1-butene copolymer; poly 1-butene, poly 1-hexene, and poly 4-methyl-1-pentene and the like can be exemplified, and these polyolefin resins may be used alone or in combinations of two or more.

In such olefin type polymers, the ethylene type polymer is excellent in release characteristics, film processability, and cost performance, and hence the ethylene type polymer is preferred. In addition, low-density polyethylene, high-density polyethylene, ethylene/1-butene copolymer, ethylene/1- hexene copolymer, ethylene/1-octene copolymer, and ethylene/4-methyl-1-pentene copolymer are especially preferred. Ethylene/vinyl ester copolymer such as ethylene/vinyl acetate copolymer, ethylene/acrylic ester copolymer, and ethylene/methacrylic acid ester copolymer; and ethylene type copolymer having carboxyl group such as ethylene/acrylic acid copolymer and ethylene/methacrylic acid copolymer and the like may form a crosslinkage with the polydimethylsiloxane having epoxy group which constitutes the present invention upon being processed by an extrusion process to generate fish eyes, which often deteriorate external appearance of the release film.

Here, the method for polymerizing the olefin type polymer is not particularly limited. For example, a radical polymerization method can be exemplified, in the case of using low-density polyethylene, ethylene/vinyl acetate copolymer, ethylene/acrylic acid copolymer, ethylene/methacrylic acid copolymer, ethylene/acrylic ester copolymer, and ethylene/methacrylic acid ester copolymer, and the like, can be exemplified.

In the case of using high-density polyethylene, ethylene/1-butene copolymer, ethylene/1- hexene copolymer; ethylene/1-octene copolymer, ethylene/4-methyl-1-pentene copolymer, polypropylene, propylene/ethylene copolymer, propylene/1-butene copolymer, poly 1-butene, poly 1-hexene, and poly 4-methyl1-pentene, and the like, polymerizing methods such as a gas phase method using a Ziegler-Natta catalyst or a metallocene catalyst, a solution method, slurry method, and a high-pressure method, can be exemplified.

In view of appearance and thickness accuracy of the release film, the above olefin type polymer is preferably an ethylene type polymer having melt mass flow rate measured according to JIS K6922-1 (1999) of 0.1-50 g/10 minute. In view of release ability, the above olefin type polymer is preferably an ethylene type polymer having density measured according to JIS K6922-1 (1999) of 880-970 kg/m³, and more preferably an ethylene type polymer having density measured according to JIS K6922-1 (1999) of 880-960 kg/m³ because such an ethylene type copolymer is excellent in film processability and release characteristics.

The polydimethylsiloxane used in the present invention is the polydimethylsiloxane having epoxy groups of which the epoxy equivalent is not less than 500 g/mol and not more than 50,000 g/mol, and of which the epoxy equivalent is preferably not less than 1000 g/mol and not more than 20,000 g/mol, more preferably not less than 1000 g/mol and not more than 10,000 g/mol. In the case in which the epoxy equivalent is less than 500 g/mol, release characteristics will be deteriorated, and hence it is not preferred. In the case in which the epoxy equivalent is more than 50,000 g/mol, adhesion between the polydimethylsiloxane having epoxy group and the olefin type polymer will be insufficient, which causes contamination on the surface of the adhesive, and hence it is not preferred.

Moreover, in the case in which the polydimethylsiloxane having epoxy groups of which epoxy equivalent is not less than 500 g/mol and not more than 50,000 g/mol used in the present invention has two or more, preferably three or more of epoxy groups on the average in one molecule, adhesion between the polydimethylsiloxane having epoxy group and the olefin type polyer becomes sufficient to avoid the adhesive surface from being contaminated, and as a result, the re-adhesiveness of the adhesive is excellent, and hence such a polydimethylsiloxane is especially preferred.

The polydimethylsiloxane having epoxy groups of which the epoxy equivalent is not less than 500 g/mol and not more than 50,000 g/mol used in the present invention preferably has a viscosity at 25 °C of not less than 50 cSt because loss in quantity during extrusion molding is small, and more preferably the above polydimethylsiloxane has viscosity at 25 °C of not less than 1,000 cSt, because very stable extrusion film processability is obtained.

As the polydimethylsiloxane having epoxy groups of which epoxy equivalent is not less than 500 g/mol and not more than 50,000 g/mol used in the present invention, Shin-etsu silicone KF-1001 TM and KF-102 TM grade sold by Shin-Etsu Chemical Co., Ltd., can be exemplified.

Compounding percentage in the resin composition for use in molding releasing film is 95-99.99 weight % of an olefin type polymer, and 0.01-5 weight % of a polydimethylsiloxane having epoxy groups of which the epoxy equivalent is not less than 500 g/mol and not more than 50,000 g/mol. The compounding percentage of the polydimethylsiloxane having epoxy groups of which epoxy equivalent is not less than 500 g/mol and not more than 50,000 g/mol is preferably 0.1-4 weight %, more preferably 0.1-3 weight percent.

Compounding the olefin type polymer at a percentage of less than 95 weight % is not preferred, because such compounding deteriorates extrusion film processability. Moreover, compounding the olefin type polymer at a percentage of more than 99.99 weight % is not preferred, because such compounding deteriorates exudating amount of the polydimethylsiloxane having epoxy groups of which the epoxy equivalent is not less than 500 g/mol and not more than 50,000 g/mol to the surface of the release film so as to deteriorate release characteristics of the release film. Compounding the polydimethylsiloxane having epoxy groups at a percentage of less than 0.01 weight % is not preferred, because such compounding deteriorates exudating amount of the polydimethylsiloxane having epoxy groups to the surface of the release film so as to deteriorate release characteristics of the release film. Compounding the polydimethylsiloxane having epoxy groups at a percentage of more than 5 weight % is not preferred, because such compounding causes an excess of exudating amount of the polydimethylsiloxane having epoxy groups to the surface of the release film, such that re-adhesiveness of the adhesive adhered to the release film is deteriorated. Furthermore, in the case of using such compounding, the resin may slip in an extruder, and as a result, the resin cannot be formed a film.

The resin composition for use in a release film of the present invention preferably includes an epoxy compound other than the polydimethylsiloxane, because such an epoxy compound improves adhesiveness between the olefin type polymer and the polydimethylsiloxane having epoxy groups of which the epoxy equivalent is not less than 500 g/mol and not more than 50,000 g/mol, such that the surface of the adhesive material is prevented from being contaminated.

As such an epoxy compound other than the polydimethylsiloxane, for example, a silane coupling agent having epoxy groups; epoxidized vegetable oil such as epoxidized soybean oil and epoxidized linseed oil; epoxidized rubbers such as epoxidized polybutadiene and epoxidized polyisoprene; homopolymers of glycidyl ester such as glycidyl methacrylate; copolymers of glycidyl ester such as glycidyl methacrylate and monomers having unsaturated double bonds such as styrene, acrylic acid and acrylic ester; phthalic acid diglycidyl ester, ethylene glycol diglycidyl ether, polyethylene-glycol diglycidyl ether, and bisphenol A-epichlorohydrin type epoxy resin, and the like, can be exemplified. Each of these compounds can be used alone or in a mixture of two or more types thereof. In these compounds, the silane coupling agent having epoxy groups is especially preferred, because it is the most superior in the surface-contamination-preventing effect of the adhesive.

The epoxy compound other than the ploydimethylsiloxane is preferably compounded in an amount of 0.001-1 parts by weight to 100 parts by weight of the resin composition including 95-99.99 weight % of an olefin type polymer, and 0.01-5 weight % of a polydimethylsiloxane having epoxy groups of which epoxy equivalent is not less than 500 g/mol and not more than 50,000 g/mol, and within a weight ratio range of [the polydimethylsiloxane having epoxy groups of which epoxy equivalent is not less than 500 g/mol and not more than 50,000 g/mol]/[the epoxy compound other than the polydimethylsiloxane]=1000/1-2/1, because such compounding of the epoxy compound other than the polydimethylsiloxane provides a resin composition being excellent in balance of surface-contamination-preventing effect of the adhesive and release characteristics.

Moreover, the amino group and/or carboxyl group equivalent of the polydimethylsiloxane having amino group and/or carboxyl group is not particularly limited, but the amino group and/or carboxyl group equivalent is preferably not less than 50 g/mol and not more than 10,000 g/mol, because usage of a polydimethylsiloxane having such amino group and/or carboxyl group equivalent improves adhesiveness between the olefin type polymer and the polydimethylsiloxane having epoxy groups, and provides an excellent surface-contamination-preventing effect of the adhesive.

The poly dimethylsiloxane having such an amino group and/or a carboxyl group is not particularly limited, for example, brand name SF-8417, BY 16-208, BY 16-880, and BY16-750 grade marketed from Dow Coming Toray Silicone, Inc. can be exemplified.

Such a polydimethylsiloxane having an amino group and/or a carboxyl group is preferably compounded in an amount of 0.001-2.5 parts by weight to 100 parts by weight of the resin composition for use in a release film of the present invention, and within a weight ratio range of [the polydimethylsiloxane having epoxy groups of which epoxy equivalent is not less than 500 g/mol and not more than 50,000 g/mol]/[the polydimethylsiloxane having an amino group and/or a carboxyl group]=1000/1-2/1, because such compounding of the polydimethylsiloxane having an amino group and/or a carboxyl group provides a resin composition being excellent in balance of surface-contamination-preventing effect of the adhesive and release ability.

Moreover, additive agents usually used for ethylene type resin, such as an antioxidant, lubricant, a neutralizer, an antiblocking agent, a surface-active agent, and a slip additive, may be added to the resin composition for use in release films of the present invention, if necessary.

Using the resin composition for use in release films of the present invention, a release film can be manufactured by well-known methods, such as an inflation blown film processing, T die-cast film processing, a calendaring, a compression molding, and an extrusion coating.

Although the thickness of the release film of the present invention is not particularly limited as long as the purpose of this invention is attained thereby, the thickness of the release film is preferably 1 micrometer - 5 mm, because the release film having such thickness has an excellent flexibility, and no risk of causing problems, such as breakage.

The release film of the present invention has preferably at least one surface which is oxidized in order to control the release agent to be transferred to the adhesive surface of a tape or a label. Furthermore, surprisingly, a release characteristic can be improved by this oxidization.

As the method for oxidizing the surface of the release film, chromic acid treatment, sulfuric acid treatment, air oxidation treatment, ozone treatment, corona discharge treatment, flame treatment, plasma treatment, and the like, can be exemplified. In the above treatments, corona discharge treatment, flame treatment, and plasma treatment are preferred, because these treatments form oxides effectively on the surface of the release film. ,

Corona discharge treatment is widely used as continuous processing technology on the surface of a plastic film or sheet, and is performed by passing a film through a corona atmosphere generated with a corona discharge-treatment apparatus.

A corona discharge density is preferably 1 to 100 W minute/m², because such a corona discharge density improves adhesiveness between the olefin type polymer and the polydimethylsiloxane having epoxy groups to prevent the adhesive surface from being contaminated and provides excellent release characteristics.

Flame treatment is performed by contacting the surface of the release film with flame generated when burning a natural gas, propane, and the like.

Plasma treatment is performed by the following process, that is, electronically exciting a simple substance or mixed gas, such as argon, helium, neon, hydrogen, oxygen, by a plasma jet, thereafter removing charged particles therefrom to form excited inert gas electrically neutralized, and then spraying the excited inert gas electrically neutralized to the surface of the release film.

Moreover, a laminate can be manufactured using the release film of the present invention by well-known laminating methods, such as sandwiching extrusion laminating method, and dry laminating method, thermal laminating method, and the like. Moreover, a laminate can be manufactured using the resin composition for use in a release film of the present invention by co-extrusion inflation blown film processing, co-extrusion T-die casting, extrusion coating, co-extrusion coating method, and the like.

In addition, as a substrate which constitutes a laminate, synthetic polymer film or sheet, woven fabric, nonwoven fabric, paper, metallic foil, and the like, can be exemplified. As a synthetic polymer film or sheet, a film or a sheet and the like which is made of synthetic polymer, such as polyester, such as polyethylene terephthalate, polyamide, polyvinyl alcohol, ethylene/vinyl acetate copolymer saponified, polycarbonate, polyethylene, and polypropylene, can be exemplified. Furthermore, the surface of these high molecular weight polymer film or sheet, may be vapor-deposited by aluminum , alumina, silica, etc., and the surface may be printed on using urethane type ink and the like.

As a woven fabric and a nonwoven fabric, one which is made of a synthetic resin such as polyester, polyethylene and polypropylene, or one which is made of a natural material, such as staple fiber can be exemplified. As papers, kraft paper, crupack extensible paper, paper of fine quality, glassine paper, a paperboard, etc. can be exemplified. In the above materials, the woven fabric or the nonwoven fabric made of paper, a synthetic resin, and/or natural material is preferred, because these materials are excellent in the cuttability of the laminate which is obtainable therefrom.

The release film which uses the resin composition for use in a release film of the present invention, and the like, are very useful as wide use industrial materials, such as release paper for a label and a seal, and an adhesive tape.

### PREFERRED EMBODIMENT OF THE INVENTION

Hereafter, preferred embodiments of the present invention will be explained in detail. However the present invention is not limited to these embodiments.

The measuring method and valuation method of physical properties and processability are shown below.
(1) Melt Mass Flow Rate (MFR)
   As for ethylene type polymer, it is measured based on JIS K 6922-1 (1999).
   As for propylene type polymer, it is measured based on JIS K7210 (1999).
(2) Density
   As for ethylene type polymer, it is measured based on JIS K 6922-1 (1999).
   As for propylene type polymer, it is measured based on JIS K7112 (1999).
(3) Release characteristic
   After sticking cloth tape with pressure sensitive adhesive (SURION TECH company make brand name cloth tape with pressure sensitive adhesive No.3310) with a width of 50 mm, and a length of 150 mm on the release film side surface of the laminate prepared in Working Examples, passing it through between rubber rolls on condition of for 5 m/minute speed and a linear pressure of 5 kg/cm, it was kept at 40 °C for seven days, to obtain the test sample for release characteristic measurement. Then, the test sample was tested in width of 15 mm, and the adhesion strength between the cloth tape with pressure sensitive adhesive and the release film was measured by the tensile test machine ("AUTO GRAPH DCS-100" manufactured by Shimadzu Seisakusyo Co.,Ltd.). Stripping speed was 300 mm/minute
(4) Re-adhesiveness
   The cloth tape with pressure sensitive adhesive with a width of 15 mm which is stripped from the release film surface in the above release characteristic test piece was stuck on an aluminum plate ("A1N30 H-H18" produced by Toyo Aluminium K.K., with a thickness of 0.1 mm) at a linear pressure of 5 kg/cm. After being kept at 23 °C for 1 day, the adhesion strength between the cloth tape with pressure sensitive adhesive and the aluminum plate was measured by a tensile test machine ("AUTO GRAPH DCS-100" manufactured by Shimadzu Seisakusyo Co., Ltd.). Stripping speed was 300 mm/minute. When the adhesive surface of the pressure sensitive adhesive tape was contaminated by a release film, the re-adhesiveness of the pressure sensitive adhesive tape is deteriorated, and the performance as pressure sensitive adhesive tape is failed. That is, it is preferred to have a higher re-adhesion strength.
(5) Adhesiveness to a substrate
   As to a laminate constituted from a paper and a release film, which is obtained in Working Examples, the adhesive strength between the paper and the release film was measured by the tensile test machine ("Auto Graph DCS-100" manufactured by Shimazu Seisakusyo Co.,Ltd.). The stripping speed was 300 mm/minute, and the width of the test piece was 15 mm. If the adhesive strength is at such a level that the paper as the substrate is destroyed upon being stripped, it can be said that adhesiveness to a substrate is good.

### Working Example 1.

As the olefin type polymer, low density polyethylene ("PETROTHENE 213" produced by TOSOH CORP., which may be described as "LDPE" hereinafter) having MFR(s) of 8g/10 minutes and density of 918 kg/m³, in an amount of 99.5 weight %, and, as the polydimethylsiloxane having epoxy group, an epoxy-denaturated silicone A ("Shin-etsu silicone KF-1001" produced by Shin-Etsu Chemical Co., Ltd., which may be described as "A" hereinafter) having an epoxy equivalent of 3500 g/mol and a viscosity of 17000 cSt, in an amount of 0.5 weight % was blended, and the blended mixture was subjected to a melt kneading process using a single screw extruder to obtain pellets of the resin composition for use in a release film.

Thus obtained pellets were supplied to the extruder of the extrusion coating apparatus having a screw of 25mm diameter to extrude at 305 degree C from a T-die to obtain a molten film. The obtained molten film was coated such that the thickness thereof should be 20 micrometers onto a corona treated surface of a paper of fine quality ("KINMARI SW" with a grammage of 50 g/m² produced by Hokuetsu Paper Mills Co., Ltd.), of which surface was treated by a corona discharge treatment at 50 W minute/m², as a substrate to obtain a laminate. On the surface of the resin composition for use in a release film on the obtained laminate, corona discharge treatment was performed at 30 W minutes/m² to obtain a release film.

After keeping the obtained laminate in the oven held at 40 °C for 20 hours, a release characteristic, re-adhesiveness, and adhesiveness to a substrate were measured, and the measurement result is shown in Table 1.

### Working Example 2

A release film was obtained by the same operation as in Working Example 1, excepting that, as the olefin type polymer, LDPE in an amount of 99 weight % was used instead of LDPE in an amount of 99.5 weight %, and an epoxy-denaturated silicone A in an amount of 1 weight % was used instead of the epoxy-denaturated silicone A in an amount of 0.5 weight %. The evaluation result is shown in Table 1.

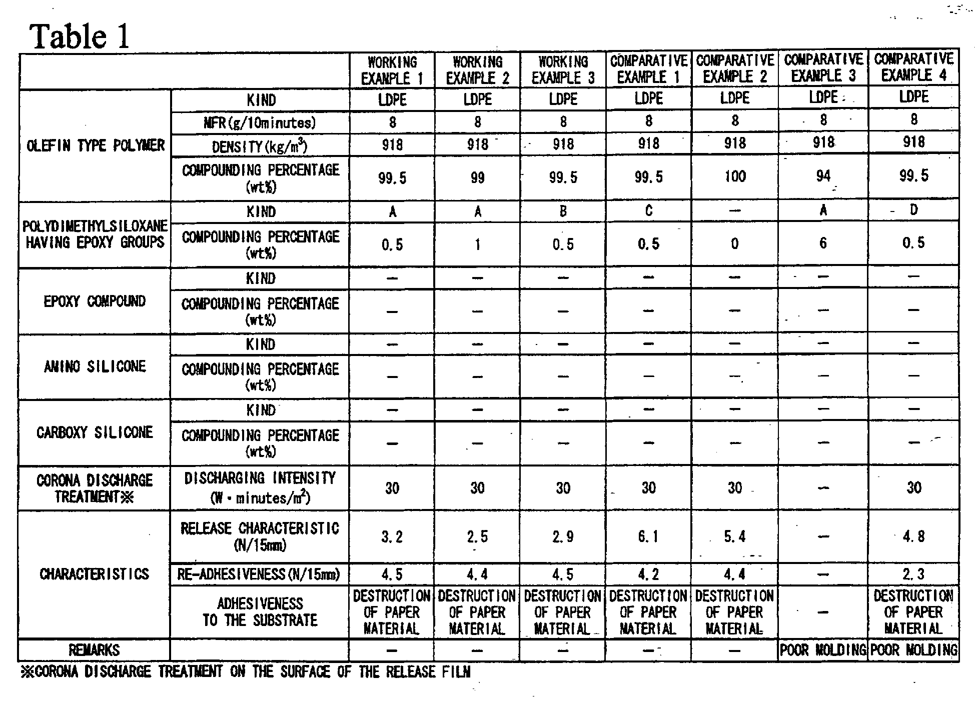

### Working Example 3.

A release film was obtained by the same operation as in Working Example 1, excepting that an epoxy-denaturated silicone B ("Shin-etsu silicone KF-102" produced by the Shin-Etsu Chemical Co., Ltd., which may be described as "B" hereinafter) having an epoxy equivalent of 3600 g/mol and viscosity of 4000 cSt was used as the polydimethylsiloxane having epoxy groups, instead of the epoxy-denaturated silicone A. The evaluation result is shown in Table 1.

### Comparative Example 1

A release film was obtained by the same operation as in Working Example 1, excepting that LDPE in an amount of 99.5 weight % and as a polydimethylsiloxane having epoxy group, an epoxy-denaturated silicone C ("Shin-etsu silicone KF-101" produced by Shin-Etsu Chemical Co., Ltd., which may be described as "C" hereinafter) having an epoxy equivalent of 350 g/mol and viscosity of 1500 cSt(s) in an amount of 0.5 weight % were used instead of the LDPE in an amount of 99.5 weight % and an epoxy-denaturated silicone A in an amount of 0.5 weight %.

As the evaluation result shows in Table 1, the adhesive strength between the cloth tape with pressure sensitive adhesive and the release film is high, and the adhesive remains on the release film surface, and the release characteristic was deteriorated.

### Comparative Example 2

A release film was obtained by the same operation as in Working Example 1, excepting that LDPE in an amount of 100 weight % was used instead of the LDPE in an amount of 99.5 weight % and an epoxy-denaturated silicone A in an amount of 0.5 weight %.

As the evaluation result shows in Table 1, the adhesive strength between the cloth tape with pressure sensitive adhesive and the release film was high, and the adhesive remains in the release film surface, and the release characteristic was deteriorated.

### Comparative Example 3

It was attempted to prepare a release film by the same operation as in Working Example 1, excepting that LDPE in an amount of 94 weight % and an epoxy-denaturated silicone A in an amount of 6 weight % were used instead of the LDPE in an amount of 99.5 weight % and an epoxy-denaturated silicone A in an amount of 0.5 weight %. However, as shown in Table 1, because extrusion molding was poor, a film was not able to be obtained.

### Comparative Example 4

A release film was obtained by the same operation as in Working Example 1, excepting that LDPE in an amount of 99.5 weight % and as a polydimethylsiloxane having no epoxy groups, a dimethylsilicone oil having viscosity of 10000 cSt(s) ("SH200" produced by Dow Coming Toray Silicone Co.,Ltd., which may be described as "D" hereinafter) were used instead of the LDPE in an amount of 99.5 weight % and an epoxy-denaturated silicone A in an amount of 0.5 weight % as the olefin type polymer. As the evaluation result shown in Table 1, re-adhesiveness was deteriorated.

### Working Example 4

A release film was obtained by the same operation as in Working Example 1, except that LDPE in an amount of 99.0 weight %, an epoxy-denaturated silicone A in an amount of 1 weight %, and gamma-glycidoxypropyltrimethoxysilane having an epoxy equivalent of 236g /mol ("Silane coupling agent KBM403 " produced by Shin-Etsu Chemical Co., Ltd., which may be described as " γ " or "gamma" hereinafter) in an amount of 0.05 parts by weight to 100 parts by weight of a composition including the LDPE in an amount of 99.0 weight % and the epoxy-denaturated silicone A in an amount of 1 weight %. The evaluation result is shown in Table 2.

**Table 2**

| | | WORKING EXAMPLE 4 | WORKING EXAMPLE 5 | WORKING EXAMPLE 6 | WORKING EXAMPLE 7 |
|---|---|---|---|---|---|
| OLEFIN TYPE POLYMER | KIND | LDPE | LDPE | LDPE | C8LL |
| | MFR(g/10minutes) | 8 | 8 | - 8 | 7.5 |
| | DENSITY (kg/m³) | 918 | 918 | 918 | 902 |
| | COMPOUNDING PERCENTAGE (wt%) | 99 | 99 | 99 | 99.5 |
| POLYDIMETHYLSILOXANE HAVING EPOXY GROUPS | KIND | A | A | A | A |
| | COMPOUNDING PERCENTAGE (wt%) | 1 | 1 | 1 | 0.5 |
| EPOXY COMPOUND | KIND | γ | - | - | - |
| | COMPOUNDING PERCENTAGE (wt%) | 0.05 | - | - | - |
| AMINO SILICONE | KIND | - | AS | - | - |
| | COMPOUNDING PERCENTAGE (wt%) | - | 0.1 | - | - |
| CARBOXY SILICONE | KIND | - | - | CS | - |
| | COMPOUNDING PERCENTAGE (wt%) | - | - | 0.1 | - |
| CORONA DISCHARGE TREATMENT 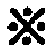 | DISCHARGING INTENSITY (W · minutes/m²) | 30 | 30 | 30 | 30 |
| CHARACTERISTICS | RELEASE CHARACTERISTIC C (N/15mm) | 2.5 | 2.7 | 2.6 | 2.4 |
| | RE-ADHESIVENESS(N/15mm) | 4.9 | 4.8 | 4.9 | 4.4 |
| | ADHESIVENESS TO THE SUBSTRATE | DESTRUCTION OF PAPER MATERIAL | DESTRUCTION OF PAPER MATERIAL | DESTRUCTION OF PAPER MATERIAL | DESTRUCTION OF PAPER MATERIAL |
| REMARKS | | - | - | - | - |

| | | | | | |
|---|---|---|---|---|---|
| 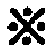 CORONA DISCHARGE TREATMENT ON THE SURFACE OF THE RELEASE FILM | | | | | |

### Working Example 5

A release film was obtained by the same operation as in Working Example 1, excepting that LDPE in an amount of 99 weight %, an epoxy-denaturated silicone A in an amount of 1 weight %, and a polydimethylsiloxane having an amino group (brand name "SF 8417" having amino groups equivalent of 1800 g/mol, produced by Dow Coming Toray Silicone Co., Ltd., which may be described as "AS" hereinafter) in an amount of 0.1 parts by weight to 100 parts by weight of a composition including the LDPE in an amount of 99 weight % and the epoxy-denaturated silicone A in an amount of 1 weight %. The evaluation result is shown in Table 2.

### Working Example 6

A release film was obtained by the same operation as in Working Example 1, excepting that LDPE in an amount of 99 weight %, an epoxy-denaturated silicone A in an amount of 1 weight %, and a polydimethylsiloxane having a carboxyl group (brand name "BY16-880" having carboxyl group equivalent of 3500 g/mol, produced by Dow Coming Toray Silicone Co., Ltd., which may be described as "CS" hereinafter) in an amount of 0.1 parts by weight to 100 parts by weight of a composition including the LDPE in an amount of 99 weight % and the epoxy-denaturated silicone A in an amount of 1 weight %. The evaluation result is shown in Table 2.

### Working Example 7

A release film was obtained by the same operation as in Working Example 1, excepting that an ethylene/1-octene copolymer having MFR of 7.5 g/10 minutes, and density of 902 kg/m³ ("AFFINITY PT1450" produced by Dow Chemical, which may be described as "C8LL" hereinafter) was used. The evaluation result is shown in Table 2.

### Working Example 8

As an olefin type polymer, propylene type polymer(brand name "NOVA TECH FW4BT" produced by Japanese Polypropylene Co.,Ltd., which may be described as "PP " hereinafter) in an amount of 99 weight % and an epoxy-denaturated silicone A having MFR(s) of 7g / 10 minutes and a density of 900 kg/m³ in an amount of 1 weight % were blended, and the blended mixture was subjected to a melt kneading process using a single screw extruder to obtain pellets of the resin composition for use in a release film.

Thus obtained pellets were supplied into the extrusion molding appartatus of the cast film manufacture equipment which has a screw of 50 mm diameter, and it was extruded out from T-die at a temperature of 220 degrees C, and after formed into a film shape having a thickness of the resin composition for use in a release film of 20 micrometers, corona treatment was performed on the surface of the resin composition for use in a release film on condition of 30W and minute / m² to obtain a release film.

After thus obtained release film was allowed to stand in the oven held warm at 40 degrees C for 20 hours, the release characteristic, re-adhesiveness, etc. were measured and the measurement result is shown in Table 3.

**Table 3**

| | | WORKING EXAMPLE 8 | CONPARATIVE EXAMPLE 5 |
|---|---|---|---|
| OLEFIN TYPE POLYMER | KIND | PP | PP |
| | MFR(g/10minutes) | 7 | 7 |
| | DENSITY(kg/m³) | 900 | 900 |
| | COMPOUNDING PERCENTAGE (wt%) | 99 | 100 |
| POLYDIMETHYL SILOXANE HAVING EPOXY GROUPS | KIND | A | - |
| | COMPOUNDING PERCENTAGE (wt%) | 1 | - |
| EPOXY COMPOUND | KIND | - | - |
| | COMPOUNDING PERCENTAGE (wt%) | - | - |
| AMINO SILICONE | KIND | - | - |
| | COMPOUNDING PERCENTAGE (wt%) | - | - |
| CARBOXY SILICONE | KIND | - | - |
| | COMPOUNDING PERCENTAGE (Wt%) | - | - |
| CORONA DISCHARGE TREATMENT 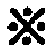 | DISCHARGING INTENSITY (W minutes/m²) | 30 | 30 |
| CHARACTERISTICS | RELEASE CHARACTERISTIC (N/15mm) | 4.8 | 8 |
| | RE-ADHESIVENESS (N/15mm) | 3.8 | 2.9 |
| | ADHESIVENESS TO THE SUBSTRATE | - | - |
| REMARKS | | - | - |

| | | | |
|---|---|---|---|
| 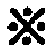 CORONA DISCHARGE TREATMENT ON THE SURFACE OF THE RELEASE FILM | | | |

### Comparative Example 5

A release film was obtained by the same operation as in Working Example 8, excepting that the PP in an amount of 100 weight % was used instead of using the PP in an amount of 99 weight % and the epoxy-denaturated silicone A in an amount of 1 weight %. As the evaluation result shown in Table 3, the adhering strength between the cloth tape with pressure sensitive adhesive and the release film is high, and the adhesive remains in the release film surface, and the release characteristic was deteriorated.

## Claims

1. A resin composition for use in release film, comprising:
95-99.99 weight % of an olefin type polymer, and
0.01-5 weight % of a polydimethylsiloxane having epoxy groups of which epoxy equivalent is not less than 500g/mol and not more than 50,000g/mol.

2. A resin composition as set forth in claim 1, wherein
said olefin type polymer is an ethylene type polymer having melt mass flow rate measured according to JIS K6922-1 (1999) of 0.1-50 g/10 minutes and density measured according to JIS K6922-1 (1999) of 880-970 kg/m³.

3. A resin composition as set forth in claim 1, further comprising
an epoxy compound other than said polydimethylsiloxane in an amount of 0.001-1 parts by weight to 100 parts by weight of said resin composition of claim 1 and within a weight ratio range of [said polydimethylsiloxane having epoxy groups of which epoxy equivalent is not less than 500g/mol and not more than 50,000 g/mol]/[said epoxy compound other than said polydimethylsiloxane]=1000/1-2/1.

4. A resin composition as set forth in claim 3, wherein said epoxy compound other than said polydimethylsiloxane is a silane coupling agent having epoxy groups.

5. A resin composition as set forth in claim 1, further comprising
a polydimethylsiloxane having an amino group and/or a carboxyl group in an amount of 0.001-2.5 parts by weight to 100 parts by weight of said resin composition of claim 1 and within a weight ratio range of [said polydimethylsiloxane having epoxy groups of which epoxy equivalent is not less than 500g/mol and not more than 50,000 g/mol]/[said polydimethylsiloxane having an amino group and/or a carboxyl group]=1000/1-2/1.

6. A resin composition according to claim 2, comprising:
an ethylene type polymer having a density measured according to JIS K6922-1 (1999) of 880-960 kg/m³.

7. A release film comprising the resin composition as set forth in any one of claims 1 to 6.

8. A release film as set forth in claim 7 , wherein at least one surface of said release film is processed by an oxidizing treatment.

9. A release film as set forth in claim 7 or 8, wherein the oxidizing treatment is at least one selected from the group consisting of corona discharge treatment, flame treatment and plasma treatment.

10. A laminate comprising at least one layer of said release film as set forth in claim 1.

11. A laminate as set forth in claim 10 comprising at least one substrate selected from paper, woven fabric or nonwoven fabric made from synthetic resin and/or natural material.

## Patentansprüche

1. Harzzusammensetzung zur Verwendung in einer Trennfolie, umfassend:
95-99,99 Gew.-% eines Polymers vom Olefin-Typ, und
0,01-5 Gew.-% eines Polydimethylsiloxans, das Epoxygruppen hat, dessen Epoxy-Äquivalent nicht weniger als 500 g/mol und nicht mehr als 50.000 g/mol ist.

2. Harzzusammensetzung, wie in Anspruch 1 ausgeführt, wobei das Polymer vom Olefin-Typ ein Polymer von Ethylen-Typ ist, das einen gemäß JIS K6922-1 (1999) gemessenen Schmelzflussindex (melt mass flow rate) von 0,1-50 g/10 Minuten und eine gemäß JIS K6922-1 (1999) gemessene Dichte von 880-970 kg/m³ hat.

3. Harzzusammensetzung, wie in Anspruch 1 ausgeführt, weiter umfassend eine Epoxyverbindung, die von dem Polydimethylsiloxan verschieden ist, in einer Menge von 0,001-1 Gewichtsteile auf 100 Gewichtsteile der Harzzusammensetzung nach Anspruch 1 und innerhalb eines Bereichs der Gewichtsverhältnisse von [dem Polydimethylsiloxan, das Epoxygruppen hat, dessen Epoxy-Äquivalent nicht weniger als 500 g/mol und nicht mehr als 50.000 g/mol ist]/[der Epoxyverbindung, die von dem Polydimethylsiloxan verschieden ist] = 1000/1-2/1.

4. Harzzusammensetzung, wie in Anspruch 3 ausgeführt, wobei die Epoxyverbindung, die von dem Polydimethylsiloxan verschieden ist, ein Silanhaftvermittler ist, der Epoxygruppen hat.

5. Harzzusammensetzung, wie in Anspruch 1 ausgeführt, weiter umfassend ein Polydimethylsiloxan, das eine Aminogruppe und/oder eine Carboxylgruppe hat, in einer Menge von 0,001-2,5 Gewichtsteile auf 100 Gewichtsteile der Harzzusammensetzung nach Anspruch 1 und innerhalb eines Bereichs der Gewichtsverhältnisse von [dem Polydimethylsiloxan, das Epoxygruppen hat, dessen Epoxy-Äquivalent nicht weniger als 500 g/mol und nicht mehr als 50.000 g/mol ist]/[dem Polydimethylsiloxan, das eine Aminogruppe und/oder eine Carboxylgruppe hat] = 1000/1-2/1.

6. Harzzusammensetzung nach Anspruch 2, umfassend:
ein Polymer vom Ethylen-Typ, das eine gemäß JIS K6922-1 (1999) gemessene Dichte von 880-960 kg/m³ hat.

7. Trennfolie, umfassend die Harzzusammensetzung, wie in einem der Ansprüche 1 bis 6 ausgeführt.

8. Trennfolie, wie in Anspruch 7 ausgeführt, wobei mindestens eine Oberfläche der Trennfolie durch eine oxidierende Behandlung bearbeitet ist.

9. Trennfolie, wie in Anspruch 7 oder 8 ausgeführt, wobei die oxidierende Behandlung mindestens eine ist, die ausgewählt wird aus der Gruppe, bestehend aus Coronaentladungs-Behandlung, Flammen-Behandlung und Plasma-Behandlung.

10. Laminat, umfassend mindestens eine Schicht der Trennfolie, wie in Anspruch 1 ausgeführt.

11. Laminat, wie in Anspruch 10 ausgeführt, umfassend mindestens ein Substrat, ausgewählt aus Papier, Webstoff oder Vliesstoff, hergestellt aus synthetischem Harz und/oder natürlichem Material.

## Revendications

1. Composition de résine pour une utilisation dans un film de relâchement, comprenant :
de 95 à 99,99 % en poids d'un polymère de type oléfine, et
de 0,01 à 5 % en poids d'un polydiméthylsiloxane ayant des groupes époxy dont l'équivalent époxy est de pas moins de 500 g/mol et de pas plus de 50000 g/mol.

2. Composition de résine selon la revendication 1, dans laquelle ledit polymère de type oléfine est un polymère de type éthylène ayant un débit massique du fondu mesuré selon la norme JIS K6922-1 (1999) de 0,1 à 50 g/10 minutes et une densité mesurée selon la norme JIS K6922-1 (1999) de 880 à 970 kg/m³.

3. Composition de résine selon la revendication 1, comprenant en outre un composé époxy autre que ledit polydiméthylsiloxane en une quantité de 0,001 à 1 parties en poids pour 100 parties en poids de ladite composition de résine selon la revendication 1 et dans une plage de rapport en poids de [ledit polydiméthylsiloxane ayant des groupes époxy dont l'équivalent époxy est de pas moins de 500 g/mol et de pas plus de 50000 g/mol]/[ledit composé époxy autre que ledit polydiméthylsiloxane] = 1000/1 à 2/1.

4. Composition de résine selon la revendication 3, dans laquelle ledit composé époxy autre que ledit polydiméthylsiloxane est un agent de couplage de silane ayant des groupes époxy.

5. Composition de résine selon la revendication 1, comprenant en outre un polydiméthylsiloxane ayant un groupe amino et/ou un groupe carboxyle en une quantité de 0,001 à 2,5 parties en poids pour 100 parties en poids de ladite composition de résine selon la revendication 1 et dans une plage de rapport en poids de [ledit polydiméthylsiloxane ayant des groupes époxy dont l' équivalent époxy est de pas moins de 500 g/mol et de pas plus de 50000 g/mol]/[ledit polydiméthylsiloxane ayant un groupe amino et/ou un groupe carboxyle] = 1000/1 à 2/1.

6. Composition de résine selon la revendication 2, comprenant un polymère de type éthylène ayant une densité mesurée selon la norme JIS K6922-1 (1999) de 880 à 960 kg/m³.

7. Film de relâchement comprenant la composition de résine selon l'une quelconque des revendications 1 à 6.

8. Film de relâchement selon la revendication 7, dans lequel au moins une surface dudit film de relâchement est traitée par un traitement oxydant.

9. Film de relâchement selon la revendication 7 ou 8, dans lequel le traitement oxydant est au moins choisi dans le groupe constitué par un traitement de décharge corona, un traitement ignifuge et un traitement plasmatique.

10. Stratifié comprenant au moins une couche dudit film de relâchement selon la revendication 1.

11. Stratifié selon la revendication 10, comprenant au moins un substrat choisi parmi le papier, le tissu tissé ou le tissu non tissé préparé à partir d'une résine synthétique et/ou d'un matériau naturel.
